# EUROPÄISCHE PATENTANMELDUNG

(11) **EP 2 829 345 A1**
(43) Veröffentlichungstag der Anmeldung: **28.01.2015**
(21) Anmeldenummer: 13177947.2
(22) Anmeldetag: 25.07.2013
(51) Int. Cl.: B23H 5/10, B23H 5/04, B23H 9/10, B23H 9/14

(54) **Elektrode, sowie ein erstes Verfahren zum Herstellen einer solchen Elektrode, ein zweites Verfahren zum Herstellen einer solchen Elektrode und ein drittes Verfahren zum Herstellen einer solchen Elektrode**

(71) Anmelder: Siemens Aktiengesellschaft, 80333 München (DE)
(72) Erfinder: Kamenzky, Susanne, 10713 Berlin (DE); Münzer, Jan, 10439 Berlin (DE); Thomaidis, Dimitrios, 14197 Berlin (DE)

(57) **Zusammenfassung**

Die Erfindung betrifft eine Elektrode (1,100) zur Bearbeitung eines Werkstücks, wobei die Elektrode (1,100) einen zu dem Werkstück (50) weisenden Endabschnitt (4,24) aufweist, wobei im Endabschnitt (4,24) zumindest ein abrasiver, spanender Schneidstoff (21) sowie ein zu einem funkenerosiven Abtrag geeignetes Material (22) vorgesehen ist, so dass bei einer Bearbeitung des Werkstücks durch die Elektrode (1,100) zumindest ein abrasiver, spanender Abtrag als auch ein funkenerosiver, nichtmechanischer Abtrag des Werkstücks (50) gleichzeitig möglich ist.

Die Erfindung betrifft weiterhin drei Verfahren zum Herstellen einer solchen Elektrode.

## Beschreibung

Die Erfindung betrifft eine Elektrode zur Bearbeitung eines Werkstücks, wobei die Elektrode einen zu dem Werkstück weisenden Endabschnitt aufweist, sowie ein erstes Verfahren zum Herstellen einer solchen Elektrode, ein zweites Verfahren zum Herstellen einer solchen Elektrode und ein drittes Verfahren zum Herstellen einer solchen Elektrode.

Turbinen sind vielfach mit Werkstücken ausgestattet, welche zum Teil sehr komplexe Formen aufweisen, beispielsweise Turbinenschaufeln. Zur Herstellung derartiger Werkstücke kommt immer häufiger das Erodieren (Electrical Discharge Machining= EDM) zum Einsatz, ein thermisches, abtragendes Fertigungsverfahren für leitfähige Werkstücke, bei dem durch elektrische Entladungsvorgänge zwischen einer Elektrode und dem Werkstück ein Materialabtrag erfolgt. Mit dem Erodieren lassen sich insbesondere komplexe Ausnehmungen ausformen, beispielsweise besonders geformte Nuten, Taschen mit komplexen Querschnittsformen oder ähnliches. Sollen Bohrungen jedoch in keramikbeschichtete Werkstücke unter Zuhilfenahme der Erodiertechnik eingebracht werden, müssen die Bohrungen vor der Beschichtung eingebracht werden und nach dem Bohren mit einem Polymer o.ä. verschlossen bzw. maskiert werden, damit sie beim nachfolgenden Beschichten mit der keramischen Wärmedämmschicht nicht verschlossen werden. Nach Beschichtung mit der Keramik müssen die Rückstände der Maskierung wieder entfernt werden.

Derzeit sind keine industriell verfügbaren Anlagen oder erprobte Technologien bekannt, um mittels Erodiertechnik bzw. direkt auf Erodiermaschinen auch keramikbeschichtete Werkstücke bohren zu können, ohne die Keramikschicht vorher dementsprechend chemisch zu verändern, damit sie elektrisch leitfähig wird. Es können daher derzeit nur metallische bzw. metallisch beschichtete Werkstücke mittels EDM gebohrt werden, da die keramische Wärmedämmschicht nicht elektrisch leitfähig ist.

Es ist daher eine erste Aufgabe der Erfindung, eine Elektrode anzugeben, welche das oben genannte Problem behebt. Eine zweite Aufgabe ist die Angabe eines ersten Verfahrens zum Herstellen einer solchen Elektrode. Eine dritte Aufgabe ist die Angabe eines zweiten Verfahrens zum Herstellen einer solchen Elektrode. Eine vierte Aufgabe ist die Angabe eines dritten Verfahrens zum Herstellen einer solchen Elektrode.

Erfindungsgemäß wird die erste Aufgabe mit der Angabe einer Elektrode zur Bearbeitung eines Werkstücks gelöst, wobei die Elektrode einen zu dem Werkstück weisenden Endabschnitt aufweist, wobei im Endabschnitt zumindest ein abrasiver, spanender Schneidstoff sowie ein zu einem thermischen Abtrag, insbesondere zu einem funkenerosiven Abtrag, geeignetes Material vorgesehen ist, so dass bei einer Bearbeitung des Werkstücks durch die Elektrode zumindest ein abrasiver, spanender Abtrag als auch ein thermischer, nichtmechanischer Abtrag des Werkstücks gleichzeitig möglich ist.

Erfindungsgemäß wird ein geeigneter Schneidstoff zur spanenden Bearbeitung einer elektrisch nichtleitfähigen Schicht, insbesondere einer nichtleitenden keramischen Oberflächenschicht, in der Elektrode gebunden; das heißt der Endabschnitt der Elektrode umfasst einen abtragbaren Schneidstoff. Der gebundene Schneidstoff ermöglicht zu Beginn der Bearbeitung den spanenden Abtrag eines nichtleitenden Werkstücks, durch eine Abrasivwirkung des gebundenen Schneidstoffs an der rotierenden Elektrode. Diese wird dabei in Richtung der Bohrungsachse, welche der Rotationsachse der Elektrode entspricht, bewegt. Ohne Beschränkung der Allgemeinheit wird nachfolgend für ein nichtleitendes beschichtetes Werkstück ein keramisch beschichtetes Werkstück herangezogen. Findet die Bearbeitung in einem Dielektrikum statt, so werden die so spanend abgetragenen Keramikpartikel vom durch und um die Elektrode zugeführten Dielektrikum fortgespült, sowie Elektrode und Werkstück von diesem gekühlt. Da im Endabschnitt der Elektrode ein Schneidstoff als auch ein Material zu einem thermischen Abtragen, insbesondere zu einem funkenerosiven Abtrag, vorhanden ist, kann der Erodierprozess im eigentlichen Sinne als thermischer Abtrag starten, sobald die Keramikschicht lokal entfernt, das heißt durchgebohrt ist. Dadurch wird die Bearbeitungszeit aufgrund der vereinfachten technischen Abläufe und der vereinfachten Logistik verkürzt. Mit der erfindungsgemäßen Elektrode kann nun ein spanendes und ein abtragendes, nichtmechanisches Fertigungsverfahren mit einem einzigen Werkzeug kombiniert werden.

Auf einer modifizierten Erodiermaschine können nun mit der erfindungsgemäßen Elektrode in diesem Zweischrittverfahren beispielsweise Kühlluftbohrungen in ein heißgasführendes Werkstück mit einer elektrisch nichtleitenden, keramischen Wärmedämmschicht gebohrt werden. Dies verbessert die Wirtschaftlichkeit der Bearbeitung, da das Werkstück nun nicht mehr nach der metallischen Beschichtung gebohrt, maskiert und dann keramisch beschichtet werden muss, sondern nach der Komplettbeschichtung in einem Arbeitsgang gebohrt werden kann. Die Qualität des Bearbeitungsergebnisses wird ebenfalls verbessert, da die Geometrie der Bohrung im Bereich der Keramik nahezu perfekt ausgeführt werden kann, während bei einem Maskierverfahren, wie es im Stand der Technik genannt worden ist, dort immer starke Unstetigkeiten in der Geometrie entstehen, die negativen Einfluss auf die Kühlwirkung und die Integrität der Keramikschichtanbindung an das Werkstück haben können. Selbstverständlich können auch andere Bohrungen oder Aussparungen oder Materialabtragungen gefertigt werden. Durch die erfindungsgemäße Elektrode wird eine durchgängige Bearbeitung eines beispielsweise keramisch beschichteten Werkstücks gesichert, da in dem Endabschnitt gleichzeitig ein spanender, abrasiver Abtrag und ein thermischer Abtrag stattfinden können.

Bevorzugt umfasst der Endabschnitt zur thermischen Abtragung als Material eine Metalllegierung und/oder ein Metall und/oder ein Halbleitermaterial. In bevorzugter Ausgestaltung weist die Metalllegierung und/oder das Metall und/oder das Halbleitermaterial eine hohe elektrische Leitfähigkeit auf. Dadurch kann der thermische Abtrag, durch beispielsweise Funkenerosion, sichergestellt werden. Bevorzugt weist die Metalllegierung und/oder das Metall und/oder das Halbleitermaterial einen hohen Schmelzpunkt auf. Dies ermöglicht eine hohe Verschleißbeständigkeit und eine präzisere Bearbeitung mit geringen Bearbeitungstoleranzen.

In bevorzugter Ausgestaltung umfasst der Schneidstoff Korund und/oder Industriediamant und/oder kubisch kristallines Bornitrid (CBN). Dies ist besonders bei keramisch beschichteten Werkstücken von Vorteil.

Bevorzugt ist der Endabschnitt pulvermetallurgisch aufgebaut und verfestigt. Der Endabschnitt kann beispielsweise gesintert werden. Dabei kann der Schneidstoff in die geeignete metallische Matrix, eingebettet, die Elektrode dann geformt und anschließend wärmebehandelt werden. So lässt sich auch beim Verschleiß der Elektroden durch den spanenden Abtrag und den Abbrand bei einer Bohrung durch beispielsweise eine Keramikschicht, ggf. eine zugehörige metallische Haftvermittlerschicht sowie durch die metallische Werkstückwand, sicherstellen, dass nach der Fertigstellung der Bohrung, bei der nächsten Bohrung wieder genügend Schneidstoff für die Bearbeitung der Keramikschicht, als auch genügend Material zur thermischen Abtragung in der richtigen Geometrie gebunden, zur Verfügung stehen. Zudem ist im Endabschnitt auch genügend Material für einen funkenerosiven Abtrag vorhanden.

Auch kann der Endabschnitt einen Enddurchmesser aufweist, wobei der Schneidstoff gleichmäßig über den gesamten Enddurchmesser verteilt ist. Dies kann für einen gleichmäßigen Abtrag von Vorteil sein.

Auch kann jedoch der Endabschnitt einen Hohlzylinder mit einer Stirnfläche und einen Umfang umfassen, wobei der Schneidstoff an der Stirnfläche und den Umfang durch ein Bindemittel gebunden ist. Dabei ist der Hohlzylinder zumindest teilweise aus einem Material, welcher zur Funkenerosion geeignet ist. An diesem Hohlzylinder wird nun der Schneidstoff gebunden. So kann ein Endabschnitt vereinfacht hergestellt werden. Dabei ist der Hohlzylinder quasi eine Elektrode aus dem Stand der Technik.

Bevorzugt weist die Elektrode einen Anfangsabschnitt mit einem Anfangsdurchmesser und der Hohlzylinder einen Hohlzylindersdurchmesser auf, wobei der Hohlzylindersdurchmesser kleiner als der Anfangsdurchmesser ist. Entspräche der Hohlzylindersdurchmesser dem Anfangsdurchmesser, und würde dann an den Hohlzylinder zusätzlich der Schneidstoff gebunden, so wäre nämlich der Endabschnittsdurchmesser dicker als der Anfangsdurchmesser. Dies würde zu einer Bohrung mit einem nicht konstanten Durchmesser führen. Daher wird der Hohlzylinder des Endabschnitts der Elektrode, an den dann der Schneidstoff gebunden wird, mit einem geringeren Hohlzylindersdurchmesser als der Anfangsdurchmesser ausgeführt. Durch geeignete Wahl des kleineren Durchmessers des Hohlzylinders des Endabschnitts der Elektrode ergibt sich nach der Anbindung des Schneidstoffes dann etwa der Elektrodenanfangsdurchmesser, so dass die Bohrung mit der so fertigstellten Elektrode auf einen konstanten Durchmesser über ihre gesamte Länge bearbeitet werden kann. Der Hohlzylinder am Endabschnitt kann vorgefertigt oder vorzugsweise von einer auf der Erodiermaschine befindlichen Abrichteinheit in Form einer Draht- oder Senkerodiereinheit oder nach dem Prinzip des Profilschleifens hergestellt werden, da somit nach jeder Bohrung der Rest der verschlissenen Elektrode wieder rekonditioniert werden kann.

Vorzugsweise weist die Elektrode eine Gesamtlänge auf, welche dem Endabschnitt entspricht. Dies bedeutet, dass die gesamte Elektrode einen Schneidstoff und ein zum thermischen Bearbeiten geeignetes Material umfasst; wie es dem Endabschnitt entspricht. Dies hat den Vorteil, dass die Elektrode für die nächste Bohrung gleich oder mit wenig Aufwand wieder einsetzbar ist. Zudem ist die Herstellung vereinfacht, da kein Endabschnitt ausgemessen werden muss.

Die zweite Aufgabe wird gelöst durch die Angabe eines ersten Verfahrens zur Herstellung einer wie oben beschriebenen Elektrode zur Bearbeitung eines Werkstücks, welche einen dem zu bearbeitenden Werkstück zugewandten Endabschnitt aufweist, wobei der Endabschnitt einen Hohlzylinder umfasst, wobei der Hohlzylinder eine Stirnfläche und einen Umfang aufweist, und wobei der Hohlzylinder zumindest teilweise ein zum thermischen Abtragen geeignetes Material umfasst, mit folgenden Schritten:
- Eintauchen des Hohlzylinders in ein Bindemittel,
- Anlagern eines Schneidstoffs auf der mit dem Bindemittel behafteten Stirnfläche und den mit dem Bindemittel behafteten Umfang des Hohlzylinders, so dass zumindest ein abrasiver, spanender Abtrag als auch ein thermischer, nichtmechanischer Abtrag des Werkstücks gleichzeitig möglich wird,
- Aushärten des mit dem Schneidstoff behafteten Bindemittels.

Vorteilhafterweise wird das Anlagern durch Eintauchen der mit dem Bindemittel behafteten Stirnfläche und den mit dem Bindemittel behafteten Umfang in einem Schneidstoffbad vorgenommen.

Der Schneidstoff wird somit außen an der Stirnfläche und an dem Umfang des Hohlzylinders des Endabschnitts, mittels eines geeigneten Bindemittels bzw. Haftvermittlers angebunden. Zur Fertigung kann der Hohlzylinder des Endabschnitts innerhalb einer Erodiermaschine in einen Behälter mit dem Bindemittel getaucht bzw. eingetunkt werden. Anschließend wird der Schneidstoff durch erneutes Eintauchen in einen Behälter mit losem Schneidstoff und/oder durch ein Besprühen mit dem Schneidstoff bzw. den Schneidstoffpartikeln, beispielsweise durch Besanden, in das Bindemittel eingelagert. Je nach Bindemittel kann dessen Aushärten und damit die feste Anbindung des Schneidstoffs an den Hohlzylinder durch eine kurzzeitige lokale Temperaturbehandlung oder die Einwirkung von UV-Licht, beispielsweise bei einem Polymerbinder, bewirkt werden.

Vorzugsweise kann auch die ganze Elektrode derart hergestellt sein; das heißt die Länge des Endabschnitts ist die Länge der Elektrode selbst.

Die dritte Aufgabe wird gelöst durch die Angabe eines zweiten Verfahrens zur Herstellung einer wie oben beschriebenen Elektrode zur Bearbeitung eines Werkstücks, welche einen dem zu bearbeitenden Werkstück zugewandten Endabschnitt aufweist, mit folgenden Schritten:
- Bereitstellen einer zumindest teilweisen hohlen Materialmatrix, insbesondere einer metallischen Matrix, wobei das Material eine hohe elektrische Leitfähigkeit und einen hohen Schmelzpunkt aufweist,
- Füllen der Hohlräume mit zumindest teilweise pulverigem Schneidstoff zu einer Vollmatrix, so dass zumindest ein abrasiver, spanender Abtrag als auch ein thermischer, nichtmechanischer Abtrag des Werkstücks gleichzeitig möglich wird,
- Verfestigen des Schneidstoffs mit der Matrix durch Wärmebehandlung zu dem Endabschnitt.

Bevorzugt ist die Wärmebehandlung ein generatives Fertigungsverfahren, insbesondere ein Sinterverfahren.

Der Schneidstoff wird in die geeignete metallische Matrix, eingebettet, die Elektrode dann geformt und anschließend wärmebehandelt. Dabei ist das Metall eine Kupferlegierung bzw. allgemein eine Metalllegierung mit sehr guter elektrischer Leitfähigkeit und hohem Schmelzpunkt. Somit wird auch beim Verschleiß der Elektrode durch den spanende Abtrag und den Abbrand bei einer Bohrung durch beispielsweise eine Keramikschicht, und die zugehörige metallische Haftvermittlerschicht sowie anschließend durch die metallische Werkstückwand sichergestellt, dass bei der nächsten Bohrung wieder genügend Schneidstoff für die Bearbeitung der Keramikschicht, als auch genügend Material zur thermischen Abtragung in der richtigen Geometrie gebunden, zur Verfügung stehen. Ist die Keramikschicht lokal entfernt, so kann jederzeit die Abtragung als funkenerosiver Prozess starten. Selbstverständlich kann auch die gesamte Elektrode derart aufgebaut sein. Die Elektrode wird somit pulvermetallurgisch aufgebaut bzw. gesintert.

Die vierte Aufgabe wird gelöst durch die Angabe eines dritten Verfahrens zur Herstellung einer wie oben beschriebenen Elektrode zur Bearbeitung eines Werkstücks, welche einen dem zu bearbeitenden Werkstück zugewandten Endabschnitt aufweist, mit den folgenden Schritten:
- Bereitstellen eines Materials aus einem ersten Pulver, wobei das erste Pulver eine hohe elektrische Leitfähigkeit und einen hohen Schmelzpunkt aufweist,
- Bereitstellen eines Schneidstoffs aus einem zweiten Pulver, wobei das zweite Pulver eine abrasive, spanende Wirkung aufweist,
- Vermischen des ersten Pulvers und des zweiten Pulvers zu einem Pulvergemisch,
- Verfestigen des Pulvergemisches zu einem Endabschnitt einer Elektrode, so dass zumindest ein abrasiver, spanender Abtrag als auch ein thermischer, nichtmechanischer Abtrag des Werkstücks gleichzeitig möglich wird.

Bevorzugt wird das Verfestigen des Pulvergemisches in einer Form durchgeführt.

Dies ist ein besonders einfaches Verfahren zur Herstellung eines solchen Endabschnitts einer Elektrode.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: einen Querschnitt einer ersten erfindungsgemäßen Elektrode,
- FIG 2:: einen Querschnitt einer zweiten erfindungsgemäßen Elektrode.

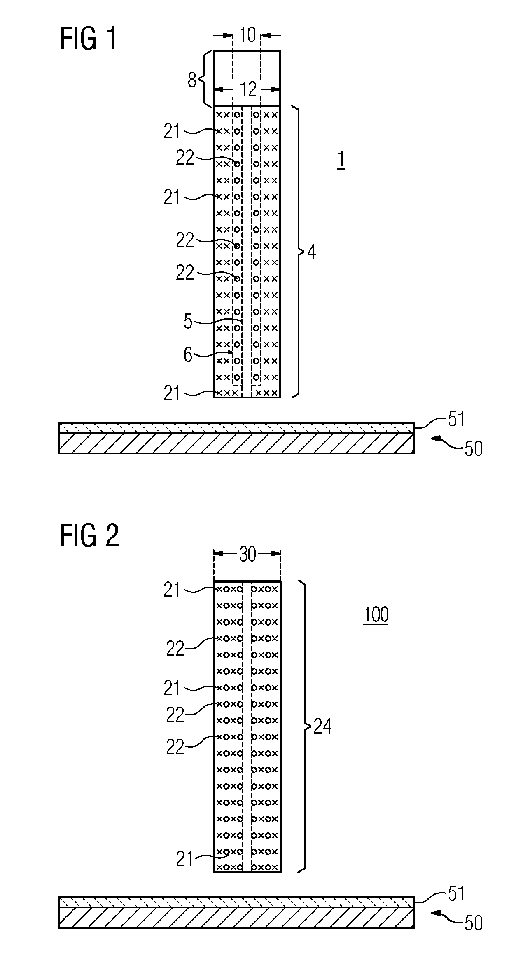

FIG 1 zeigt einen Querschnitt einer ersten erfindungsgemäßen Elektrode 1, welche einen Endabschnitt 4 in Richtung eines Werkstücks 50 aufweist. Der Endabschnitt 4 umfasst einen Hohlzylinder 5 mit einem Umfang 6 und einer Stirnfläche 7. Dabei weist der Hohlzylinder 5 noch einen Hohlzylindersdurchmesser 10 auf. Zudem weist die erste, erfindungsgemäße Elektrode 1 noch an der werkstückabweisenden Seite einen Anfangsabschnitt 8 auf. Dieser weist einen Anfangsdurchmesser 12 auf. Dabei kann der Anfangsabschnitt 8 aus einem Metall bestehen, welches zur thermischen Abtragung, insbesondere zur Funkenerosion, geeignet ist.

Der Endabschnitt 4 weist einen Schneidstoff 21 auf, welcher außen an den Hohlzylinder 5, das heißt an der Stirnfläche 7 und an dem Umfang 6, mittels eines geeigneten Bindemittels oder Haftvermittlers angebunden ist. Dazu kann der Endabschnitt 4 innerhalb einer Erodiermaschine (nicht gezeigt) in einen Behälter (nicht gezeigt) mit dem Bindemittel getaucht bzw. gedippt werden. Anschließend wird durch erneutes Eintauchen in einen Behälter (nicht gezeigt) mit pulverigem Schneidstoff 21 und/oder durch ein Besprühen mit dem Schneidstoff 21, beispielsweise durch Besanden, der Schneidstoff 21 in das Bindemittel eingelagert. Je nach Bindemittel kann dessen Aushärten und damit die feste Anbindung des Schneidstoffs 21 an den Hohlzylinder 5 durch eine kurzzeitige lokale Temperaturbehandlung oder die Einwirkung von UV-Licht (Polymerbinder) bewirkt werden. Entspräche der Hohlzylindersdurchmesser 10 dem Anfangsdurchmesser 12, und würde dann an den Hohlzylinder 5 zusätzlich der Schneidstoff 21 gebunden, so wäre der Endabschnittsdurchmesser 4 dicker als der Anfangsdurchmesser 12. Dies würde zu einer Bohrung mit einem nicht konstanten Durchmesser führen. Daher kann der Hohlzylinder 5 des Endabschnitts 4 der Elektrode 1, an den dann der Schneidstoff 21 gebunden wird, mit einem geringeren Hohlzylindersdurchmesser 10 als der Anfangsdurchmesser 12 ausgeführt werden. So kann beispielsweise bei einer Bohrung mit der ersten, erfindungsgemäßen Elektrode 1 auf einen konstanten Durchmesser über die gesamte Länge der ersten, erfindungsgemäßen Elektrode 1 gearbeitet werden. Der dünnere Hohlzylinder 5 kann vorgefertigt oder vorzugsweise von einer auf der Erodiermaschine (nicht gezeigt) befindlichen Abrichteinheit (nicht gezeigt), beispielsweise in Form einer Drahtoder Senkerodiereinheit (nicht gezeigt) nach dem Prinzip des Profilschleifens hergestellt werden, da somit nach jeder Bohrung der Rest der verschlissenen ersten, erfindungsgemäßen Elektrode 1 wieder rekonditioniert werden kann.

Somit weist der Endabschnitt 4 einer ersten, erfindungsgemäßen Elektrode 1 einen geeigneten Schneidstoff 21 zur spanenden Bearbeitung einer elektrisch nicht leitfähigen Keramikschicht 51 eines zu bearbeitenden Werkstücks 50 auf. Ein insbesondere für Keramik geeigneter Schneidstoff 21 ist dabei z.B. Korund, Granat(Sand), Industriediamant, CBN o.ä..

Zudem weist der Hohlzylinder 5 ein zur thermischen Abtragung geeignetes Material 22 mit sehr guter elektrischer Leitfähigkeit und hohem Schmelzpunkt auf. Der gebundene Schneidstoff 21 ermöglicht zu Beginn der Bearbeitung der Keramikschicht 51 des zu bearbeitenden Werkstücks 50 den spanenden Abtrag dieser Keramikschicht 51 durch die Abrasivwirkung des gebundenen Schneidstoffs 21 in dem rotierenden Endabschnitt 4 der ersten Elektrode 1, die dabei in Richtung der Bohrungsachse (entspricht der Rotationsachse der Elektrode 1) zugestellt wird. Ist die Keramikschicht 51 des Werkstücks 50 lokal entfernt bzw. durchgebohrt, startet der Erodierprozess im eigentlichen Sinne als funkenerosiver Abtrag.

FIG 2 zeigt nun eine durch Sintern pulvermetallurgisch aufgebaute zweite, erfindungsgemäße Elektrode 100. Dabei ist die ganze Elektrode 100 gesintert; das heißt der Endabschnitt 24 entspricht quasi der gesamten zweiten, erfindungsgemäßen Elektrode 100. Auch hier weist der Endabschnitt 24 einen geeigneten Schneidstoff 21 zur spanenden Bearbeitung einer elektrisch nichtleitfähigen Keramikschicht 51 eines zu bearbeitenden Werkstücks 50, z.B. Korund, Granat (Sand), Industriediamant, CBN o.ä. sowie ein zur thermischen Abtragung geeignetes Material 22 auf. Somit wird die durchgängige Bearbeitung des mit einer Keramikschicht 51 beschichteten Werkstücks 50 gesichert, da durch den Endabschnitt 24 gleichzeitig ein spanender, abrasiver Abtrag und ein thermischer Abtrag stattfinden kann.

Zur Herstellung eines Endabschnitts 24 bzw. der zweiten Elektrode 100, kann der Schneidstoff 21 in eine geeignete metallische Matrix, z.B. eine Kupferlegierung bzw. eine Metalllegierung mit sehr guter elektrischer Leitfähigkeit und hohem Schmelzpunkt, eingebettet werden; die Elektrode 100 bzw. der Endabschnitt 24 dann geformt und anschließend wärmebehandelt werden.

Auch kann eine solche Elektrode 100 durch Bereitstellen eines Materials 22 aus einem ersten Pulver, und eines Schneidstoffs 21 aus einem zweiten Pulver gefertigt werden, so dass zumindest ein abrasiver, spanender Abtrag, als auch ein thermischer, nichtmechanischer Abtrag eines Werkstücks 50 gleichzeitig möglich ist. Dabei weist das erste Pulver eine hohe elektrische Leitfähigkeit und einen hohen Schmelzpunkt und das zweite Pulver eine abrasive, spanende Wirkung auf. In diesem Fall werden das erste Pulver und das zweite Pulver zu einem Pulvergemisch gemischt und zu dem Endabschnitt 24 der Elektrode 100 verfestigt. Der Schneidstoff 21 ermöglicht auch hier zu Beginn der Bohrbearbeitung der Keramikschicht 51 des zu bearbeitenden Werkstücks 50, den spanenden Abtrag durch die Abrasivwirkung des Schneidstoffs 21 an der rotierenden Elektrode 100. Ist die Keramikschicht lokal entfernt bzw. durchgebohrt, startet der Erodierprozess im eigentlichen Sinne als funkenerosiver Abtrag.

Die zweite erfindungsgemäße Elektrode 100 weist dabei einen Enddurchmesser 30 auf, wobei der Schneidstoff 21 und das zum thermischen Abtragen geeignete Material 22 gleichmäßig über diesen Enddurchmesser 30 verteilt sind. Somit kann sehr einfach sichergestellt werden, dass gleichzeitig ein spanender und ein thermischer Abtrag möglich ist.

Mit der erfindungsgemäßen Elektrode 1,100 können in einem Zweischrittverfahren beispielsweise Kühlluftbohrungen in ein heißgasführendes Werkstück 50 mit einer elektrisch nichtleitenden, keramischen Wärmedämmschicht 51 gebohrt werden. Dies verbessert die Wirtschaftlichkeit der Bearbeitung. Die Qualität des Bearbeitungsergebnisses wird ebenfalls verbessert, da die Geometrie der Bohrung im Bereich der Keramikschicht 51 nahezu perfekt ausgeführt werden kann, während bei einem Maskierverfahren, wie es im Stand der Technik genannt worden ist, dort immer starke Unstetigkeiten in der Geometrie entstehen, die negativen Einfluss auf die Kühlwirkung und die Integrität der Keramikschichtanbindung an das Werkstück 50 haben können.

Mit der erfindungsgemäßen Elektrode 1,100 ist eine Bearbeitung eines keramisch beschichteten Werkstücks 50 ohne Maskierung des Werkstücks 50 und Austausch einer Elektrode möglich. Entspricht der Endabschnitt 4,24 der gesamten Elektrode 1,100 so kann die Elektrode 1,100 nach Beendigung der ersten Bohrung zügig und ohne wesentlichen Aufwand für eine zweite, derartige Bohrung verwendet werden. Dies spart Material, Zeit und Arbeit.
Nach der Fertigstellung der Bohrung, lässt sich durch dieses Verfahren sicherstellen, dass auch beim Verschleiß der Elektrode 1, 100 durch den spanende Abtrag und den Abbrand bei einer Bohrung durch beispielsweise eine Keramikschicht 51, und die zugehörige metallische Haftvermittlerschicht sowie anschließend durch die metallische Werkstückwand, bei der nächsten Bohrung wieder genügend Schneidstoff 21 für die Bearbeitung der Keramikschicht 51, als auch genügend Material 22 zur thermischen Abtragung in der richtigen Geometrie gebunden, zur Verfügung stehen.

Durch das gleichzeitige Vorhandensein des abrasiven, spanenden Schneidstoffs 21 sowie eines zu einem thermischen Abtrag, geeigneten Materials 22 in quasi jeder Schicht des Endabschnitts 4,24 ist ein abrasiver, spanender Abtrag als auch ein thermischer, nichtmechanischer Abtrag des Werkstücks 50 gleichzeitig möglich.

## Patentansprüche

1. Elektrode (1,100) zur Bearbeitung eines Werkstücks, wobei die Elektrode (1,100) einen zu dem Werkstück (50) weisenden Endabschnitt (4,24) aufweist,
**dadurch gekennzeichnet, dass** im Endabschnitt (4,24) zumindest ein abrasiver, spanender Schneidstoff (21) sowie ein zu einem thermischen Abtrag, insbesondere zu einem funkenerosiven Abtrag, geeignetes Material (22) vorgesehen ist, so dass bei einer Bearbeitung des Werkstücks durch die Elektrode (1,100) zumindest ein abrasiver, spanender Abtrag als auch ein thermischer, nichtmechanischer Abtrag des Werkstücks (50) gleichzeitig möglich ist.

2. Elektrode (1,100) nach Anspruch 1,
**dadurch gekennzeichnet, dass** der Endabschnitt (4,24) als Material (22) zur thermischen Abtragung eine Metalllegierung und/oder ein Metall und/oder ein Halbleitermaterial umfasst.

3. Elektrode (1,100) nach Anspruch 2,
**dadurch gekennzeichnet, dass** die Metalllegierung und/oder das Metall und/oder das Halbleitermaterial eine hohe elektrische Leitfähigkeit aufweist.

4. Elektrode (1,100) nach Anspruch 2 oder 3,
**dadurch gekennzeichnet, dass** die Metalllegierung und/oder das Metall und/oder das Halbleitermaterial einen hohen Schmelzpunkt aufweist.

5. Elektrode (1,100) nach einem der vorhergehenden Ansprüche,
**dadurch gekennzeichnet, dass** der Schneidstoff (21) Korund und/oder Industriediamant und/oder kubisch kristallines Bornitrid (CBN) umfasst.

6. Elektrode (1,100) nach einem der vorhergehenden Ansprüche,
**dadurch gekennzeichnet, dass** der Endabschnitt (4,24) pulvermetallurgisch aufgebaut und verfestigt ist.

7. Elektrode (1,100) nach einem der vorhergehenden Ansprüche,
**dadurch gekennzeichnet, dass** der Endabschnitt (4,24) einen Enddurchmesser (30) aufweist, und dass der Schneidstoff (21) gleichmäßig über den gesamten Enddurchmesser (30) verteilt ist.

8. Elektrode (1,100) nach einem der vorhergehenden Ansprüche 1 bis 5,
**dadurch gekennzeichnet, dass** der Endabschnitt (4,24) einen Hohlzylinder (5) mit einer Stirnfläche (7) und einen Umfang (6) umfasst, und der Schneidstoff (21) an die Stirnfläche (7) und den Umfang (6) durch ein Bindemittel gebunden ist.

9. Elektrode (1,100) nach Anspruch 8,
**dadurch gekennzeichnet, dass** die Elektrode (1,100) einen Anfangsabschnitt (8) mit einem Anfangsdurchmesser (12) und der Hohlzylinder (5) einen Hohlzylindersdurchmesser (10) aufweist und wobei der Hohlzylindersdurchmesser (10) kleiner als der Anfangsdurchmesser (12) ist.

10. Elektrode (1,100) nach einem der Ansprüche 1-9,
**dadurch gekennzeichnet, dass** die Elektrode (1,100) eine Gesamtlänge aufweist, welche dem Endabschnitt (4,24) entspricht.

11. Verfahren zur Herstellung einer Elektrode (1,100) nach einem der Ansprüche 1 - 5 und 8- 10 zur Bearbeitung eines Werkstücks, welche einen dem zu bearbeitenden Werkstück (50) zugewandten Endabschnitt (4,24) aufweist, wobei der Endabschnitt (4,24) einen Hohlzylinder (5) umfasst, wobei der Hohlzylinder (5) eine Stirnfläche (5) und einen Umfang (6) aufweist und wobei der Hohlzylinder (5) zumindest teilweise ein zum thermischen Abtragen geeignetes Material (22) umfasst, **gekennzeichnet durch** folgende Schritte:
- Eintauchen des Hohlzylinders (5) in ein Bindemittel,
- Anlagern eines Schneidstoffs (21) auf der mit dem Bindemittel behafteten Stirnfläche (7) und dem mit dem Bindemittel behafteten Umfang (6) des Hohlzylinders (5), so dass zumindest ein abrasiver, spanender Abtrag als auch ein thermischer, nichtmechanischer Abtrag des Werkstücks (50) gleichzeitig möglich wird,
- Aushärten des mit dem Schneidstoff (21) behafteten Bindemittels.

12. Verfahren zur Herstellung einer Elektrode (1,100) nach Anspruch 11,
**dadurch gekennzeichnet, dass** das Anlagern durch Eintauchen der mit dem Bindemittel behafteten Stirnfläche (7) und dem mit dem Bindemittel behafteten Umfang (6) in ein Schneidstoffbad vorgenommen wird.

13. Verfahren zur Herstellung einer Elektrode (1,100) nach Anspruch 12,
**dadurch gekennzeichnet, dass** das Anlagern durch Besprühen mit Schneidstoff (21) der mit dem Bindemittel behafteten Stirnfläche (7) und dem mit dem Bindemittel behafteten Umfang (6) vorgenommen wird.

14. Verfahren zur Herstellung einer Elektrode (1,100) zur Bearbeitung eines Werkstücks, welche einen dem zu bearbeitenden Werkstück (50) zugewandten Endabschnitt (4,24) aufweist, nach einem der Ansprüche 1-7 **gekennzeichnet durch** folgende Schritte:
- Bereitstellen einer zumindest teilweisen hohlen Materialmatrix, insbesondere einer metallischen Matrix, wobei das Material (22) eine hohe elektrische Leitfähigkeit und einen hohen Schmelzpunkt aufweist,
- Füllen der Hohlräume mit zumindest teilweise pulvrigem Schneidstoff (21) zu einer Vollmatrix, so dass zumindest ein abrasiver, spanender Abtrag als auch ein thermischer, nichtmechanischer Abtrag des Werkstücks (50) gleichzeitig möglich wird,
- Verfestigen des Schneidstoffs (21) mit der Matrix **durch** Wärmebehandlung zu dem Endabschnitt (4,24).

15. Verfahren zur Herstellung einer Elektrode (1,100) nach Anspruch 14,
**dadurch gekennzeichnet, dass** die Wärmebehandlung ein generatives Fertigungsverfahren, insbesondere ein Sinterverfahren ist.

16. Verfahren zur Herstellung einer Elektrode (1,100) nach einem der Ansprüche 1-7 zur Bearbeitung eines Werkstücks, welche einen dem zu bearbeitenden Werkstück (50) zugewandten Endabschnitt (4,24) aufweist, **gekennzeichnet durch** folgende Schritte:
- Bereitstellen eines Materials (22) aus einem ersten Pulver, wobei das erste Pulver eine hohe elektrische Leitfähigkeit und einen hohen Schmelzpunkt aufweist;
- Bereitstellen eines Schneidstoffs (21) aus einem zweiten Pulver, wobei das zweite Pulver eine abrasive, spanende Wirkung aufweist;
- Vermischen des ersten Pulvers und des zweiten Pulvers zu einem Pulvergemisch,
- Verfestigen des Pulvergemisches zu einem Endabschnitt (4,24), so dass zumindest ein abrasiver, spanender Abtrag als auch ein thermischer, nichtmechanischer Abtrag des Werkstücks gleichzeitig möglich werden.

17. Verfahren zur Herstellung einer Elektrode (1,100) nach Anspruch 16,
**dadurch gekennzeichnet, dass** das Verfestigen des Pulvergemisches in einer Form durchgeführt wird.
